# FASCICULE DE BREVET EUROPEEN

(11) **EP 4 319 957 B1**
(45) Date de publication et mention de la délivrance du brevet: **21.10.2026**
(21) Numéro de dépôt: 22720687.7
(22) Date de dépôt: 05.04.2022
(51) Int. Cl.: B29C 49/48, B29C 49/20, B29C 49/04, B29C 49/42, B29L 31/00

(54) **MOULE, MACHINE DE MOULAGE ET PROCÉDÉ DE MOULAGE PAR EXTRUSION-SOUFFLAGE**
FORM, FORMMASCHINE UND VERFAHREN ZUM EXTRUSIONSBLASFORMEN
MOULD, MOULDING MACHINE AND METHOD FOR MOULDING BY EXTRUSION BLOW-MOULDING

(30) Priorité: 06.04.2021 LU 102744
(43) Date de publication de la demande: 14.02.2024
(73) Titulaire: OPmobility C-Power Belgium Research, 1200 Woluwe-Saint-Lambert (BE)
(72) Inventeur: COING, Jean-François, 1130 BRUXELLES (BE); CHAUSSINAND, Antoine, 1130 BRUXELLES (BE)
(74) Mandataire: LLR
(86) Numéro de dépôt international: PCT/EP2022/058950
(87) Numéro de publication internationale: WO 2022/214462

(56) Documents cités:
- JP-A- 2009 149 004
- US-A1- 2014 144 914
- US-A1- 2014 265 052
- US-A1- 2019 022 910
- US-B2- 9 616 608

## Description

### DOMAINE TECHNIQUE DE L'INVENTION

La présente invention concerne un moule de fabrication par extrusion-soufflage d'un corps creux de réservoir en matière plastique pour un véhicule automobile à partir d'une paraison, le réservoir comportant au moins un composant interne fixé à l'intérieur de la paraison lors du moulage du corps creux. Plus particulièrement, l'invention concerne un moule comprenant deux parties comportant plusieurs sections délimitant intérieurement une cavité de moule comprenant une surface totale de moulage destinée à reproduire une forme prédéterminée du corps creux à fabriquer.

L'invention concerne également une machine de moulage par extrusion-soufflage d'un corps creux de réservoir en matière plastique pour un véhicule automobile à partir d'une paraison.

L'invention concerne enfin un procédé de moulage par extrusion-soufflage d'un corps creux de réservoir en matière plastique pour un véhicule automobile à partir d'une paraison, le réservoir comportant au moins un composant interne fixé à l'intérieur de la paraison lors du moulage du corps creux.

### ARRIÈRE-PLAN TECHNIQUE DE L'INVENTION

Dans le document WO 2008/138869, la Demanderesse décrit un moule pour la fabrication d'un réservoir à carburant muni d'un composant interne ou d'un ensemble de composants internes. Les empreintes du moule comprennent plusieurs tiges mobiles, une surface d'appui est prévue à l'extrémité libre de chaque tige mobile pour pousser localement la paraison à l'état fondu et l'amener en contact avec une zone d'un composant interne pour former, par pressage, une fixation du composant interne à l'intérieur de la paraison. Un autre exemple est décrit dans le document US 2014/265052 ou le document US 9,616,608.

La surface d'appui d'une tige mobile étant limitée par sa section, plus le composant interne possède de zones à fixer et plus il faut prévoir de tiges mobiles. L'extrémité libre d'une tige mobile présente typiquement une surface d'appui d'environ 4000 mm², ce qui représente moins de 2% de la surface totale du moule. Avec six tiges mobiles, c'est moins de 12% de la surface totale du moule. De même, plus l'ensemble de composants internes contient de composants internes et plus il faut prévoir de tiges mobiles. Ceci n'est pas satisfaisant car la conception du moule devient plus complexe et sa fabrication plus coûteuse.

Par ailleurs, la Demanderesse a constaté qu'à l'endroit où la paraison est poussée par une tige mobile vers une zone d'un composant interne, la matière de la paraison est étirée vers cette zone de fixation de sorte que la paraison a une épaisseur réduite au niveau de la fixation. Ceci n'est pas souhaitable car une réduction de l'épaisseur de la matière à l'endroit de la fixation peut provoquer un défaut de fixation du composant interne. En outre, la réduction d'épaisseur constatée au niveau de la fixation s'accompagne souvent d'une autre déformation. Cette autre déformation est une ondulation de la matière autour de la fixation. Ceci n'est pas souhaitable non plus car plus le réservoir subit de déformations pendant sa fabrication et moins la résistance mécanique du réservoir obtenu est bonne. Les risques précités sont évidemment aggravés par la multiplication des tiges mobiles.

La Demanderesse a également constaté que la multiplication des tiges mobiles entraîne une dégradation de l'homogénéité de température de refroidissement du moule du fait que les tiges mobiles ne font pas parties du circuit de refroidissement du moule. Ceci n'est pas satisfaisant car une dégradation de l'homogénéité de température de refroidissement du moule est susceptible de provoquer des déformations du réservoir pendant sa fabrication.

Un autre inconvénient du moule précité est que la multiplication des tiges mobiles entraîne la multiplication des mécanismes de mise en mouvement des tiges mobiles ce qui conduit à augmenter la taille et la complexité de la machine de moulage par extrusion-soufflage équipée d'un tel moule.

On comprend dès lors que le coût de fabrication d'un réservoir muni d'un (ou plusieurs) composant(s) interne(s) augmente avec le nombre de tiges mobiles nécessaires pour fixer le (ou les) composant(s) interne(s).

### RÉSUME DE L'INVENTION

L'invention a notamment pour but de remédier aux inconvénients précités en fournissant un moule garantissant une fabrication sans déformation et à moindre coût d'un réservoir comportant un (ou plusieurs) composant(s) interne(s), ceci indépendamment du nombre de fixations du (ou des) composant(s) interne(s) à l'intérieur de la paraison.

À cet effet, l'invention se rapporte à un moule de fabrication par extrusion-soufflage d'un corps creux de réservoir en matière plastique pour un véhicule automobile à partir d'une paraison, le réservoir comportant au moins un composant interne fixé à l'intérieur de la paraison lors du moulage du corps creux, le moule comprenant deux parties déplaçables l'une par rapport à l'autre délimitant intérieurement, lorsqu'elles sont fermées l'une contre l'autre en position de fermeture finale, une surface totale de moulage destinée à reproduire une forme prédéterminée du corps creux à fabriquer, au moins une des parties du moule comportant :
- au moins une première section ayant une première surface de moulage d'une première portion du corps creux à fabriquer, ladite première surface de moulage comportant au moins une région d'appui configurée pour former, par pressage induit par le déplacement de la première surface de moulage vers une position de fermeture intermédiaire des parties du moule, une zone de fixation dudit au moins un composant interne à l'intérieur de la paraison,
- une deuxième section ayant une deuxième surface de moulage d'une deuxième portion du corps creux à fabriquer,
la deuxième section de la partie du moule étant mobile par rapport à la au moins une première section associée de la partie du moule au moins entre la position de fermeture intermédiaire et la position de fermeture finale des parties du moule, **caractérisé en ce que** la première surface de moulage de la partie du moule comporte plusieurs régions d'appui et est configurée afin que les régions d'appui forment en même temps, par pressage induit par le déplacement de la première surface de moulage vers la position de fermeture intermédiaire des parties du moule, plusieurs zones de fixation dudit au moins un composant interne à l'intérieur de la paraison.

Avantageusement selon l'invention, le moule permet de fixer un ou plusieurs composants internes sans faire appel à plusieurs tiges mobiles, ces dernières étant remplacées par une section de moule ayant une surface de moulage suffisamment étendue pour pouvoir appuyer la paraison contre plusieurs zones à fixer du (ou des) composant(s) interne(s) en même temps.

Outre le gain en termes de coût, l'invention permet d'éviter de déformer localement la matière de la paraison lors de la mise en contact de celle-ci avec une zone à fixer du fait que la première surface de moulage s'étend entre, c'est-à-dire notamment comprend, différentes zones de fixation du (ou des) composant(s) interne(s) avec l'intérieur de la paraison. Grâce à cette disposition, l'épaisseur de la matière à l'endroit de chaque zone de fixation n'est pas réduite et l'ondulation de la matière autour de cette zone de fixation est évitée.

Un autre avantage du moule selon l'invention est qu'il permet d'éviter d'augmenter la taille et la complexité de la machine de moulage par extrusion-soufflage équipée d'un tel moule, ceci quels que soient le nombre de zones de fixation et le nombre de composants internes du futur réservoir.

L'invention peut également comporter l'une ou plusieurs des caractéristiques optionnelles suivantes, prises seules ou en combinaison.

La première surface de moulage de la partie du moule peut être configurée pour s'étendre selon une surface circonscrite contenant les régions d'appui associées à la partie du moule. Ainsi, chaque partie comportant une première surface de moulage présente une surface unique vers la paraison en position de fermeture intermédiaire afin de fixer la paraison, grâce aux différentes régions d'appui distinctes de la première surface de moulage, selon plusieurs zones de fixation prédéterminées ou toutes les zones de fixation dudit au moins un composant interne de la partie du moule en même temps.

La surface circonscrite de la première surface de moulage de la partie du moule peut comporter une distance de marge prédéterminée au moins autour des régions d'appui dudit au moins un composant interne associées à la partie du moule afin de limiter les ondulations de la matière autour de chaque zone de fixation. On comprend ainsi que la première surface de moulage comporte une surface unique plus étendue autour des zones de fixation dudit au moins un composant interne afin d'éviter une différence de relief trop prononcée à proximité des zones de fixation dudit au moins un composant interne à l'intérieur de la paraison. La distance de marge prédéterminée au moins autour des régions d'appui peut être comprise entre 1 mm et 60 mm.

La surface circonscrite de la première surface de moulage de la partie du moule est préférentiellement au moins égale à 30% de la surface totale de moulage. Il est immédiat que, suivant le mode de réalisation, c'est-à-dire si une seule partie du moule ou les deux parties du moule comporte(nt) au moins une première section, le pourcentage total de la au moins une première section de moule est respectivement au moins égale à 30 % ou au moins égale à 60 % de la surface totale de moulage. Toutefois, la surface circonscrite de la première surface de moulage de la partie du moule peut être comprise entre 20 % et 40 % de la surface totale de moulage sans sortir du cadre de l'invention, c'est-à-dire par exemple égale à 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 % ou 40 %.

Ainsi, selon un premier mode de réalisation, chaque partie du moule peut comporter au moins une première section et une deuxième section et, selon un deuxième mode de réalisation, une seule des parties du moule comporte au moins une première section et une deuxième section. Typiquement, dans le deuxième mode de réalisation, la première partie du moule peut comporter au moins une première section et une deuxième section et, la deuxième partie du moule peut comporter une section unique monobloc.

Dans la position de fermeture finale, la au moins une première section de moule de chaque partie du moule est préférentiellement entourée par sa deuxième section associée de la partie du moule. Ainsi, ledit au moins un composant interne est entièrement enfermé dans le corps creux.

Dans le premier mode de réalisation, la au moins une première section de moule de chaque partie du moule peut comprendre au moins une région d'appui configurée pour appuyer la paraison contre ledit même au moins un composant interne afin de former au moins deux zones de fixation différentes dudit même au moins un composant interne pour fixer ledit même au moins un composant interne à l'intérieur de la paraison lors du moulage du corps creux. On comprend qu'au moins une région d'appui de la au moins une première section de la première partie du moule peut ainsi être alignée, c'est-à-dire à l'aplomb, avec au moins une partie d'une région d'appui de la au moins une première section de la deuxième partie du moule afin de fixer deux régions sensiblement opposées du composant interne en même temps en deux régions distinctes de l'intérieur de la paraison. Ainsi, les premières sections de moule agissent comme un étau qui enserre ledit au moins un composant interne.

Quel que soit le mode de réalisation, la au moins une première section de la partie du moule peut comprendre, comme notamment dans une des régions d'appui, au moins un élément d'aspiration destiné à aspirer la paraison lors du moulage du corps creux. Ainsi, la paraison est mieux plaquée sur la première surface de moulage, ce qui évite aussi la déformation locale de la paraison.

La au moins une première section de la partie du moule peut comprendre un élément choisi parmi un élément de préhension, un élément de chauffage et un élément combiné de préhension et de chauffage d'une pièce, qui peut être ou non ledit au moins un composant interne, destinée à être moulée avec la première portion du corps creux. Ainsi, il est possible de lier une pièce à la première portion du corps creux lors de son moulage. Dans un exemple, l'élément de préhension est une pince ou un élément d'aspiration et l'élément de chauffage est un chauffeur électrique. Dans un exemple, la pièce est une attache métallique ou un renfort fibreux. Dans un autre exemple, l'élément de chauffage est un chauffeur hydraulique.

La au moins une première section de la partie du moule peut comprendre un outil de soufflage destiné à introduire un gaz sous pression à l'intérieur de la paraison. Dans un exemple, l'outil de soufflage est une aiguille de soufflage. Dans la mesure où un outil de soufflage est nécessaire, cette disposition permet d'éviter de placer un outil de soufflage dans la deuxième section de moule ce qui aurait pour conséquence de dégrader les performances évaporatives et mécaniques du réservoir obtenu, ainsi que d'augmenter les risques de déformations subies par le réservoir pendant sa fabrication.

La au moins une première section de la partie du moule peut comprendre un premier dispositif de refroidissement destinée à refroidir la première portion du corps creux. Ceci permet d'éviter toute déformation de la première portion du corps creux pendant sa fabrication.

La deuxième section de la partie du moule peut comprendre un deuxième dispositif de refroidissement destinée à refroidir la deuxième portion du corps creux. Ceci permet d'éviter toute déformation de la deuxième portion du corps creux pendant sa fabrication.

Avantageusement, le premier dispositif de refroidissement et le deuxième dispositif de refroidissement font partie d'un même circuit de refroidissement. Ceci permet d'homogénéiser la température du moule.

La au moins une première section de la partie du moule peut comprendre plusieurs premières sections afin d'augmenter la modularité du moule.

L'invention se rapporte également à une machine de moulage par extrusion-soufflage d'un corps creux de réservoir en matière plastique pour un véhicule automobile à partir d'une paraison, **caractérisée en ce que** la machine comprend un moule tel que présenté plus haut. Ainsi, la machine de moulage bénéficie de tous les avantages associés au moule.

L'invention se rapporte enfin à un procédé de moulage par extrusion-soufflage d'un corps creux de réservoir en matière plastique pour un véhicule automobile à partir d'une paraison, le réservoir comportant au moins un composant interne fixé à l'intérieur de la paraison lors du moulage du corps creux, **caractérisé en ce que** le procédé comprend les étapes suivantes :
a) introduire ledit au moins un composant interne et la paraison à l'état fondu dans un moule ouvert en deux parties de manière à ce que ledit au moins un composant interne soit entouré par la paraison, au moins une partie du moule comprenant au moins une première section et une deuxième section délimitant intérieurement respectivement une première surface de moulage et une deuxième surface de moulage d'une surface totale de moulage du moule,
b) déplacer la au moins une première section de la partie du moule pour amener le moule dans une position de fermeture intermédiaire dans laquelle la au moins une première section de la partie du moule appuie la paraison contre ledit au moins un composant interne afin de fixer ledit au moins un composant interne à l'intérieur de la paraison, la première surface de moulage étant configurée pour former en même temps, par pressage, plusieurs zones de fixation dudit au moins un composant interne à l'intérieur de la paraison,
c) déplacer la deuxième section de la partie du moule par rapport à la au moins une première section de la partie du moule pour amener le moule dans une position de fermeture finale dans laquelle les deux parties du moule sont fermées l'une contre l'autre en délimitant intérieurement la surface totale de moulage destinée à reproduire une forme prédéterminée du corps creux à fabriquer,
d) réaliser un soufflage de la paraison en plaquant ladite paraison sur la surface totale de moulage du moule à l'aide d'un gaz sous pression,
e) ouvrir le moule pour sortir le corps creux fabriqué.

Le procédé de moulage selon l'invention utilise de préférence une paraison extrudée. Selon l'invention, chaque composant interne est entouré par la paraison, soit en extrudant la paraison autour de chaque composant interne, soit en insérant chaque composant interne dans la paraison. Dans le cas où le composant interne est inséré dans la paraison, cette dernière peut être amenée dans le moule ouvert au moyen d'un robot.

La paraison extrudée peut être étirée pour permettre l'insertion du composant interne sans risque de collision avec la paraison, ceci peut se faire par un dispositif adéquat. Dans un exemple, le procédé de moulage selon l'invention utilise un outil permettant d'étirer la paraison pour la maintenir ouverte comme, par exemple, du type référencé 6 dans le document WO 2008/138869. Cet outil peut consister en des pinces, mâchoires ou mors susceptible d'agripper les bords de la paraison et de les maintenir écartés. Cet outil peut être piloté par un robot.

L'invention peut également comporter l'une ou plusieurs des caractéristiques optionnelles suivantes, prises seules ou en combinaison.

De préférence, on introduit un gaz sous pression à l'intérieur de la paraison pour effectuer un pré-soufflage de ladite paraison entre l'étape a) et l'étape b). Une telle introduction de gaz peut être effectuée selon l'étape b du document WO 2008/138869 afin notamment d'expanser la paraison en homogénéisant l'épaisseur de la paraison. L'introduction de gaz à plus faible pression que pour l'étape d) peut être obtenue de différentes manières connues par l'homme du métier. À titre d'exemple nullement limitatif, l'introduction de gaz pour le pré-soufflage peut être obtenue par l'outil de soufflage utilisé pour réaliser l'étape d), par un outil dédié monté sur le moule, par une tige creuse de support de composant interne ou par une buse comprise dans la tête d'extrusion de la paraison.

À l'étape b), ledit au moins un composant interne peut être fixé à l'intérieur de la paraison par soudage, bouterollage ou ancrage mécanique.

### BRÈVE DESCRIPTION DES DESSINS

D'autres particularités et avantages de l'invention ressortiront clairement de la description qui en est faite ci-après, à titre indicatif et nullement limitatif, en référence aux dessins annexés, dans lesquels :
- la figure 1 est une vue en transparence partielle de côté d'un moule selon un premier mode de réalisation de l'invention en position ouverte ;
- la figure 2 est une vue en transparence partielle de côté d'un moule selon le premier mode de réalisation de l'invention en position de fermeture intermédiaire ;
- la figure 3 est une vue de face d'une partie de moule selon le premier mode de réalisation de l'invention en position ouverte ;
- la figure 4 est une vue en perspective d'une partie de moule selon le premier mode de réalisation de l'invention en position ouverte ;
- les figures 5 à 7 sont des vues schématiques en coupe du premier mode de réalisation d'un moule selon l'invention dans différentes positions successives ;
- les figures 8 à 10 sont des vues schématiques en coupe d'un deuxième mode de réalisation d'un moule selon l'invention dans différentes positions successives ;
- la figure 11 est une vue en coupe d'une partie de moule selon l'invention montrant des éléments d'aspiration ;
- la figure 12 est une vue en coupe d'une partie de moule selon l'invention montrant un outil de soufflage ;
- la figure 13 est une vue en coupe d'une partie de moule selon l'invention montrant un élément de préhension à l'état non activé ;
- la figure 14 est une vue en coupe d'une partie de moule selon l'invention montrant un élément de préhension à l'état activé ;
- la figure 15 est une vue en coupe d'une partie de moule selon l'invention montrant un élément combiné de préhension et de chauffage électrique à l'état non activé ;
- la figure 16 est une vue en coupe d'une partie de moule selon l'invention montrant un élément combiné de préhension et de chauffage hydraulique à l'état non activé ;
- la figure 17 est une vue en coupe d'une partie de moule selon l'invention montrant un dispositif de refroidissement.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionnés d'un indice. La description de leur structure et de leur fonction n'est donc pas systématiquement reprise.

Dans tout ce qui suit, les orientations sont les orientations des figures. En particulier, les termes « supérieur », « inférieur », « gauche », « droit », « au-dessus », « en-dessous », « vers l'avant » et « vers l'arrière » s'entendent généralement par rapport au sens de représentation des figures.

On entend par « réservoir », un réservoir étanche, apte à stocker un fluide dans des conditions d'utilisation et d'environnement diverses et variées. Le réservoir fabriqué avec le moule selon l'invention est réalisé avec une paroi en matière plastique. Une paroi de réservoir présente une surface intérieure et une surface extérieure. La surface intérieure est une surface tournée vers le volume intérieur du réservoir tandis que la surface extérieure est une surface tournée vers le volume extérieur au réservoir.

On entend par « matière plastique », toute matière comprenant au moins un polymère en résine de synthèse. Tous les types de matière plastique peuvent convenir. Des matières plastiques convenant bien appartiennent à la catégorie des matières thermoplastiques.

On entend par « matière thermoplastique », tout polymère thermoplastique, y compris les élastomères thermoplastiques, ainsi que leurs mélanges. On désigne par le terme « polymère » aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius (10°C) conviennent particulièrement bien. Comme exemple de telles matières, on trouve celles qui présentent une polydispersion de leur masse moléculaire.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères précités.

Un polymère souvent employé est le polyéthylène. D'excellents résultats ont été obtenus avec du polyéthylène haute densité (PEHD).

Dans un exemple, le réservoir fabriqué avec le moule selon l'invention est un réservoir à carburant qui comprend une structure multicouche comprenant au moins une couche de matière thermoplastique et au moins une couche supplémentaire qui peut, de manière avantageuse, être constituée d'un matériau barrière aux liquides et/ou aux gaz. De préférence, la nature et l'épaisseur de la couche barrière sont choisies de manière à limiter au maximum la perméabilité des liquides et des gaz en contact avec la paroi du réservoir. De préférence, cette couche est à base d'un matériau barrière, c'est-à-dire d'une résine imperméable au carburant telle que l'EVOH par exemple (copolymère éthylène - acétate de vinyle partiellement hydrolysé). Alternativement, le réservoir peut être soumis à un traitement de surface (fluoration ou sulfonation) ayant pour but de le rendre imperméable au carburant.

On entend par « paraison », une préforme d'une seule pièce, généralement extrudée et de forme substantiellement tubulaire, qui est destinée à constituer la paroi du réservoir après moulage, c'est-à-dire après une opération qui consiste à mettre la paraison, qui est à l'état fondu, aux formes et dimensions requises à l'aide du moule pour obtenir un réservoir.

On entend par « composant interne », un composant ayant une fonction à remplir dans le réservoir telle que ventiler, renforcer, pomper du fluide, mesurer le niveau du fluide, diminuer le bruit lié aux vagues de fluide dans le réservoir. Dans un exemple, le composant interne est un pilier de renfort qui relie deux côtés opposés de la surface intérieure du réservoir.

On entend par « première section » et « deuxième section » de moule, respectivement un premier et un deuxième élément moulant situé dans au moins une des parties du moule.

On entend par « première surface de moulage », la surface interne de la au moins une première section de moule délimitant l'espace de moulage de la première portion du corps creux. Cette surface interne comprend un fond et des parties faisant saillies sur le fond.

On entend par « deuxième surface de moulage », la surface interne de la deuxième section de moule délimitant l'espace de moulage de la deuxième portion du corps creux. Cette surface interne comprend un fond et des parties faisant saillie sur le fond.

On entend par « la première surface de moulage est au moins égale à 30% de la surface totale de moulage », le fait que l'aire de la première surface de moulage est supérieure ou égale à 30% de l'aire de la surface totale de moulage tout en étant strictement inférieure à 100% de l'aire de la surface totale moulage.

Avantageusement, la somme des surfaces de moulage des deux parties du moulage est égale à la surface totale de moulage. Ainsi, les deux parties du moule suffisent pour fabriquer le corps creux de réservoir en entier.

On entend par « soudage plastique », un ensemble de techniques utilisées pour souder deux pièces en matière thermoplastique. À titre d'exemple, le soudage plastique peut consister, dans la mesure où les matériaux du composant interne et de la paraison sont compatibles au soudage, à appliquer, par pressage de chaque région d'appui de la au moins une première section de moule, une pression de contact à l'interface entre l'intérieur de la paraison, qui est à l'état fondue, et une zone à fixer dudit au moins un composant interne. Pour faciliter le soudage plastique, la zone à fixer dudit au moins un composant interne est, de préférence, préalablement chauffée pour être ramollie et fondue.

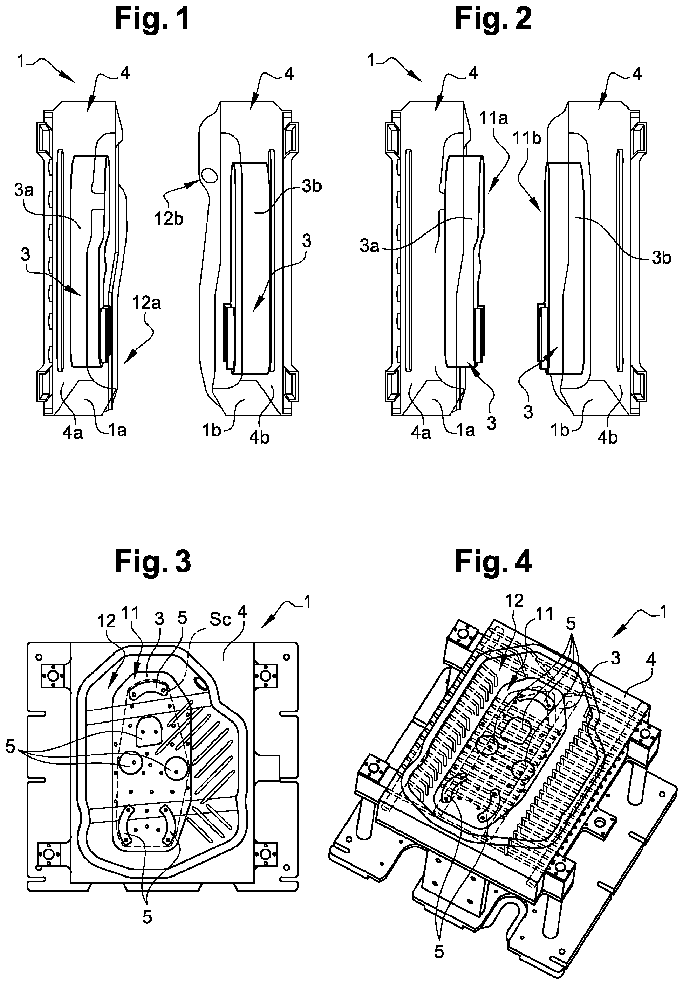

On entend par « bouterollage », un ensemble de techniques utilisées pour fixer un composant interne à la paraison, notamment dans le cas où les matériaux du composant interne et de la paraison ne sont pas compatibles au soudage, par pressage de chaque région d'appui de la au moins une première section de moule, afin d'induire l'entrée d'une partie de la paraison par fluage de cette dernière dans un évidement du composant interne. Après durcissement de la paraison, le bouterollage empêche, grâce à la forme de l'évidement, le retrait du composant par rapport à la paraison durcie. Des exemples de forme durcie de paraison et d'évidement de composant sont référencés respectivement 5 et 3 dans les figures 1 et 2 du document WO 2007/090453.

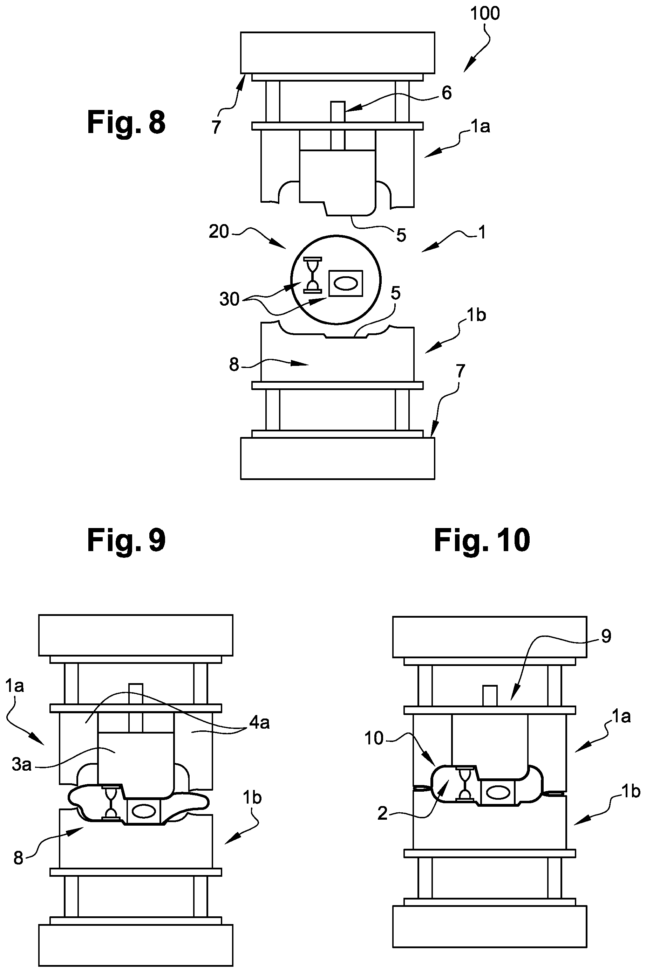

On entend par « ancrage mécanique », un ensemble de techniques utilisées pour fixer un composant interne à la paraison, notamment dans le cas où les matériaux du composant interne et de la paraison ne sont pas compatibles au soudage, par pressage de chaque région d'appui de la au moins une première section de moule, afin d'induire l'entrée d'une partie du composant interne dans la paraison par fluage de cette dernière. Après durcissement de la paraison, l'ancrage mécanique empêche, grâce à la forme du composant interne entrée dans la paraison, le retrait du composant interne par rapport à la paraison durcie. Des exemples de forme durcie de paraison et d'une partie entrée de composant interne sont référencés respectivement 116 et 102 dans la figure 10 du document EP 1 211 196.

Les organes d'extrusion-soufflage connus de l'homme du métier sont repris de manière habituelle sauf exceptions indiquées dans la présente description. Les organes habituels tels que les supports de composants internes (par exemple des tiges), les moyens de soufflage, les moyens de fabrication de la paraison, les moyens de séparation et de guidage de la paraison autour des composants internes ou les moyens d'étanchéité de la paraison pour effectuer un pré-soufflage tels que ceux expliqués par exemple dans le document WO 2008/138869 (cf. notamment références 3, 6, 7 et 7') ne sont donc pas systématiquement décrits dans la présente description.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

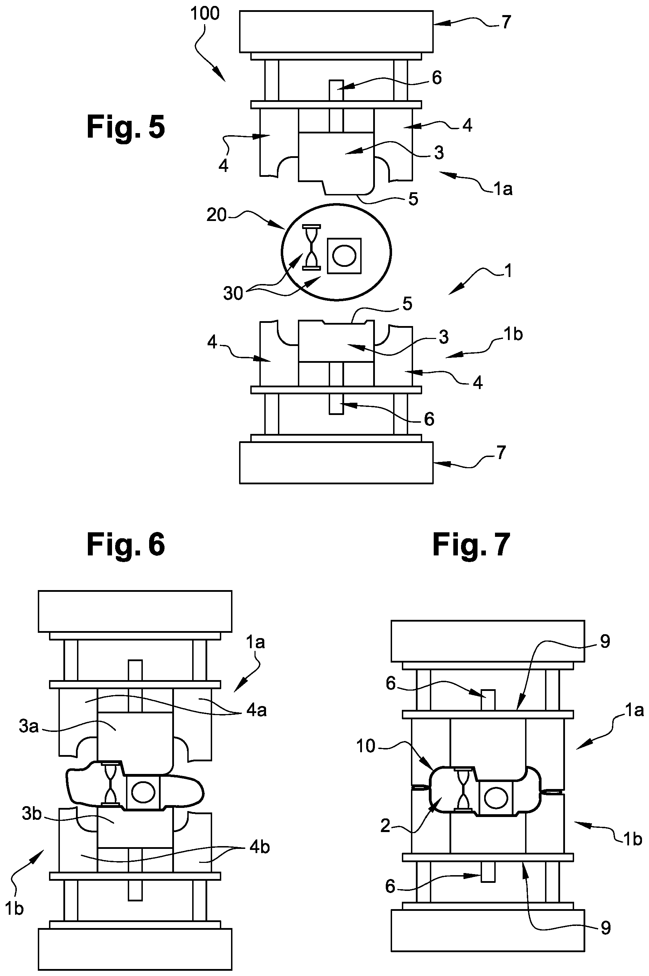

Les figures 1 et 2 illustrent un moule 1 pour la fabrication par moulage par extrusion-soufflage d'un corps creux 10 de réservoir en matière plastique pour un véhicule automobile à partir d'une paraison 20, le réservoir comportant au moins un composant interne 30 fixé à l'intérieur de la paraison lors du moulage du corps creux. Plus particulièrement, la figure 1 illustre le moule 1 en position d'ouverture et la figure 2 illustre le moule dans une position de fermeture intermédiaire. Comme expliqué ci-dessous, le corps creux 10 est obtenu lorsque le moule 1 est en position de fermeture finale (illustrée aux figures 7 et 10).

Le moule 1 comprend deux parties 1a et 1b déplaçables l'une par rapport à l'autre délimitant intérieurement, lorsqu'elles sont fermées l'une contre l'autre (comme visible aux figures 7 et 10), une surface totale de moulage, ou cavité 2, destinée à reproduire une forme prédéterminée du corps creux 10 à fabriquer.

Selon l'invention, au moins une des parties 1a, 1b du moule 1 comprend :
- au moins une première section 3a, 3b ayant une première surface 11, 11a, 11b de moulage d'une première portion du corps creux 10 à fabriquer, ladite première surface 11, 11a, 11b de moulage comportant au moins une région d'appui 5 configurée pour former, par pressage, une zone de fixation de l'intérieur de la paraison 20 avec ledit au moins un composant interne 30,
- une deuxième section 4, 4a, 4b ayant une deuxième surface 12, 12a, 12b de moulage d'une deuxième portion du corps creux 10 à fabriquer.

La deuxième section 4, 4a, 4b de la partie 1a, 1b du moule 1 est mobile par rapport à sa au moins une première section 3, 3a, 3b associée de la partie 1a, 1b du moule 1 entre au moins une position de fermeture intermédiaire des parties 1a, 1b du moule 1 (illustrée aux figures 2, 6 et 9) et une position de fermeture finale des parties 1a, 1b du moule 1 (illustrée aux figures 7 et 10).

Avantageusement selon l'invention, la première surface 11, 11a, 11b de moulage de la partie 1a, 1b du moule 1 comporte plusieurs régions d'appui 5 comme illustré aux figures 3 et 4 et est configurée afin que les régions d'appui 5 forment en même temps, par pressage, plusieurs zones de fixation dudit au moins un composant interne 30 à l'intérieur de la paraison 20.

Comme illustré à la figure 3, la première surface 11, 11a, 11b de moulage de la partie 1a, 1b du moule 1 peut ainsi être configurée pour s'étendre selon une surface circonscrite Sc (en traits interrompus à la figure 3) contenant des régions 5 d'appui de la partie 1a, 1b du moule 1 voire toutes les régions 5 d'appui associées à la partie 1a, 1b du moule 1. Bien entendu, la surface circonscrite Sc en traits interrompus à la figure 3 n'est qu'un exemple et les zones d'appui 5 peuvent ne pas être reliées entre elles par des segments rectilignes mais des segments courbes sans sortir du cadre de l'invention.

Ainsi, chaque partie 1a, 1b comportant une première surface 11, 11a, 11b de moulage présente une surface unique vers la paraison 20 en position de fermeture intermédiaire (illustrée aux figures 2, 6 et 9) afin de fixer la paraison 20, grâce aux différentes régions d'appui 5 distinctes de la première surface 11, 11a, 11b de moulage, selon plusieurs zones de fixation prédéterminées ou toutes les zones de fixation dudit au moins un composant interne 30 de la partie 1a, 1b du moule 1 en même temps.

La surface circonscrite Sc de chaque première surface 11, 11a, 11b de moulage peut comporter une distance de marge prédéterminée au moins autour des régions 5 d'appui dudit au moins un composant interne 30 associées à la partie du moule 1 afin de limiter les ondulations de la matière autour de chaque zone de fixation. La distance de marge prédéterminée au moins autour des régions 5 d'appui peut être comprise entre 1 mm et 60 mm. Bien entendu, la distance de marge prédéterminée n'est pas forcément constante par rapport à chaque région 5 d'appui ou entre chaque région d'appui. La figure 3 montre ainsi un exemple de première surface 11 dont la marge prédéterminée n'est pas constante autour d'un autre exemple de surface circonscrite Sc en traits interrompus sans que l'invention y soit limitée.

La surface circonscrite de la première surface 11, 11a, 11b de moulage de la partie 1a, 1b du moule 1 est préférentiellement au moins égale à 30% de la surface totale de moulage. Il est immédiat que, suivant le mode de réalisation, c'est-à-dire si une seule partie 1a, 1b du moule 1 ou les deux parties 1a, 1b du moule 1 comporte(nt) au moins une première section 3, 3a, 3b, le pourcentage total de la au moins une première section 3, 3a, 3b de moule 1 est respectivement au moins égale à 30 % ou au moins égale à 60 % de la surface totale de moulage. Toutefois, la surface circonscrite Sc de la première surface 11, 11a, 11b de moulage de la partie 1a, 1b du moule peut être comprise entre 20 % et 40 % de la surface totale de moulage sans sortir du cadre de l'invention, c'est-à-dire par exemple égale à 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 % ou 40 %.

Les figures 5 à 7 illustrent une machine de moulage 100 par extrusion-soufflage d'un corps creux 10 de réservoir en matière plastique pour un véhicule automobile à partir d'une paraison 20. La machine 100 comprend le moule 1 présenté plus haut selon un premier mode de réalisation. La figure 5 montre le moule 1 en position d'ouverture (moule 1 ouvert), la figure 6 montre le moule 1 en position de fermeture intermédiaire et la figure 7 montre le moule en position de fermeture finale.

Dans la position de fermeture intermédiaire, la au moins une première section 3, 3a, 3b de moule 1 fait saillie de la deuxième section 4, 4a, 4b de moule 1. Dans la position de fermeture finale, la deuxième section 4, 4a, 4b de moule 1 entoure la au moins une première section 3, 3a, 3b de moule 1 qui n'a pas changée de place, de sorte que les première 11, 11a, 11b et deuxième 12, 12a, 12b surfaces de moulage se rejoignent pour former la surface totale de moulage, ou cavité 2.

La au moins une première section 3, 3a, 3b de moule 1 comprend des régions d'appui 5 configurées pour appuyer la paraison 20 contre ledit au moins un composant interne 30 afin de former au moins deux zones de fixation différentes dudit même au moins un composant interne 30 pour fixer ledit même au moins un composant interne 30 à l'intérieur de la paraison 20 lors du moulage du corps creux 10.

Avantageusement, chaque région d'appui 5 est configurée pour autoriser le soudage, le bouterollage ou l'ancrage mécanique pour fixer ledit au moins un composant interne 30 à l'intérieur de la paraison 20 lors du moulage du corps creux 10. Chaque région d'appui peut ainsi comprendre une géométrie, des caractéristiques mécaniques et/ou un matériau destiné à faciliter le soudage, le bouterollage ou l'ancrage mécanique. À titre d'exemple nullement limitatif, la région d'appui 5 peut comporter une surface plane dont le matériau possède une température de fusion supérieure à celle de la paraison et de la zone à fixer du composant interne afin que, par pressage de la région d'appui, au moins une zone de fixation par soudage soit formée entre la paraison et la zone à fixer du composant interne. Bien entendu, en addition ou en substitution, la région d'appui peut également comprendre une protubérance destinée à favoriser un bouterollage et/ou un évidement destiné à favoriser un ancrage mécanique.

La première partie 1a de moule 1 comprend au moins une première section 3a de moule 1 et, la deuxième partie 1b de moule 1 comprend au moins une autre première section 3b de moule 1. La au moins une première section 3a de moule 1 est mobile par rapport à la au moins une autre première section 3b de moule 1 entre la position d'ouverture et la position de fermeture intermédiaire du moule 1. La au moins une première section 3a, 3b de chaque partie 1a, 1b de moule 1 comprend un premier actionneur 6 pour passer de la position d'ouverture à la position de fermeture intermédiaire et réciproquement.

La première partie 1a de moule 1 comprend une deuxième section 4a de moule 1 et, la deuxième partie 1b de moule 1, une autre deuxième section 4b de moule 1. Les deuxièmes sections 4a, 4b de moule 1 sont mobiles l'une par rapport à l'autre entre la position de fermeture intermédiaire et la position de fermeture finale du moule 1. Chaque deuxième section 4a, 4b de moule 1 comprend un deuxième actionneur 7 pour passer de la position de fermeture intermédiaire à la position de fermeture finale et réciproquement.

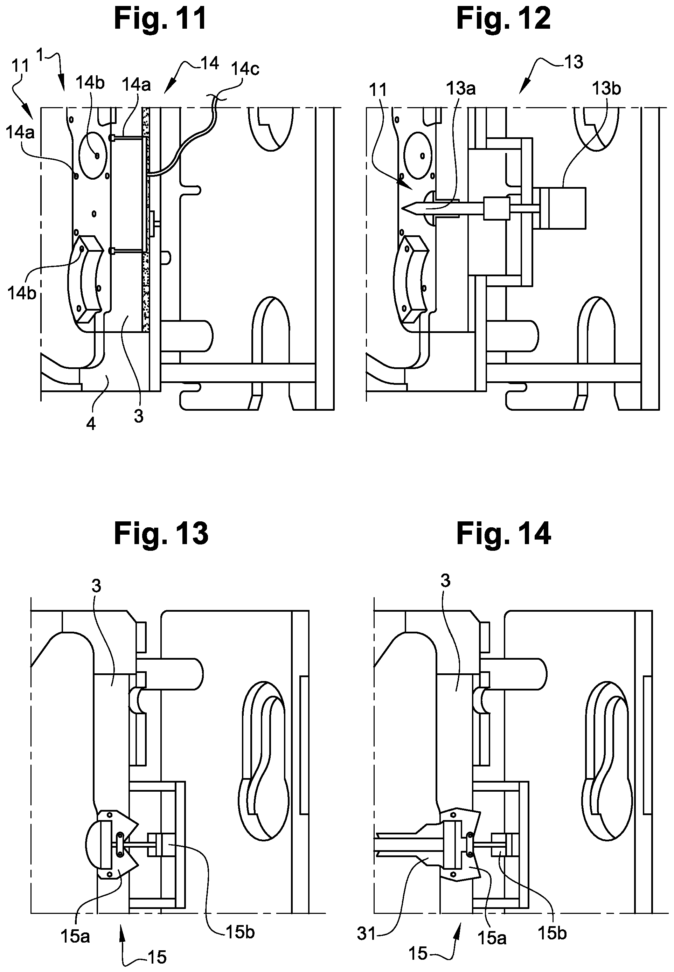

Dans l'exemple illustré à la figure 11, la au moins une première section de moule 3 comprend, dans au moins une région d'appui 5, au moins un élément 14b d'aspiration destiné à aspirer la paraison 20 lors du moulage du corps creux 10. On peut également voir que le fond de la première surface 11 de moulage comporte également au moins un élément 14a d'aspiration. On peut également s'apercevoir que plusieurs élément 14a d'aspiration sont reliés entre eux et communiquent via un raccordement 14c avec un dispositif d'aspiration (non représenté) tel qu'une machine à vide. Ainsi, la paraison 20 est mieux plaquée sur la première surface 11 de moulage, ce qui évite aussi la déformation locale de la paraison 20.

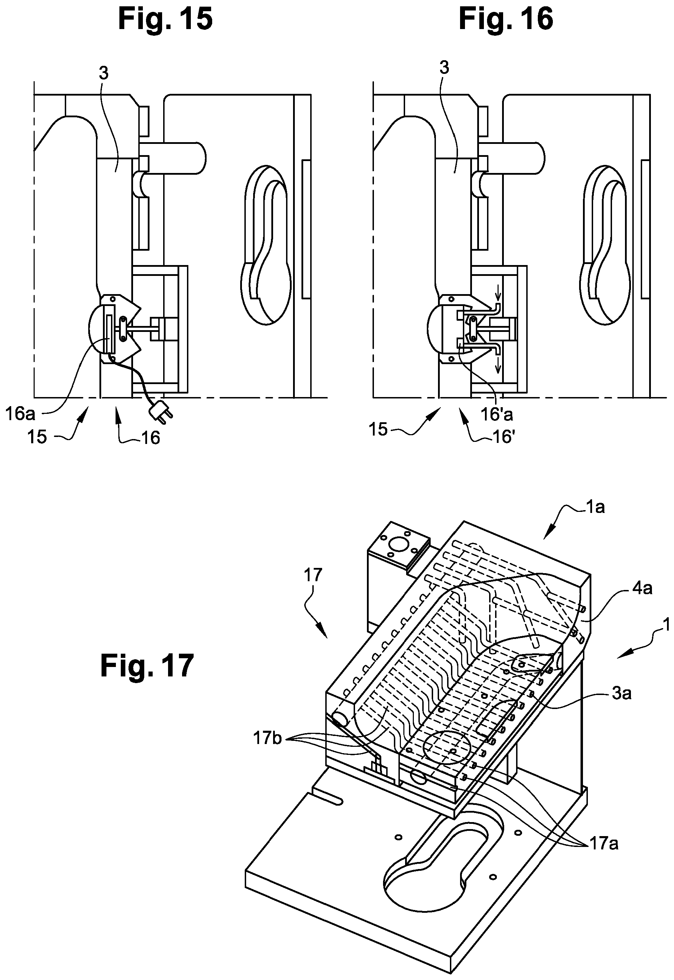

Dans les exemples illustrés aux figures 13 à 16, la au moins une première section 3 de moule 1 comprend un élément choisi parmi un élément 15 de préhension, un élément 16, 16' de chauffage et un élément combiné de préhension 15 et de chauffage 16, 16' d'une pièce 31, qui peut être ou non ledit au moins un composant interne 30, destinée à être moulée avec la première portion du corps creux 10, l'élément de préhension peut ainsi être est une pince 15a ou un élément d'aspiration. Dans les exemples des figures 13-14, la pince 15a peut passer d'une position ouverte (figure 13) à une position fermée (figure 14) à l'aide d'un actionneur 15b afin de rabattre la paraison 20 contre la pièce 31 comme, par exemple, expliqué dans le document EP 3 946 905. L'élément 16 de chauffage dans l'exemple de la figure 15 est un chauffeur électrique 16a alors que celui 16' dans l'exemple de la figure 16 est un chauffeur hydraulique 16'a afin de réchauffer localement au moins la paraison 20. Selon un exemple, la pièce 31 est une attache métallique ou un renfort fibreux.

Dans l'exemple illustré à la figure 12, la au moins une première section 3 de moule 1 comprend un outil 13 de soufflage destiné à introduire un gaz sous pression à l'intérieur de la paraison 20. Comme visible à la figure 12, l'outil 13 de soufflage comporte une aiguille 13a de soufflage capable de percer la paraison 20 pour exécuter l'étape d). On peut également voir que l'aiguille 13a est montée mobile par rapport à la première surface 11 de moulage à l'aide d'un actionneur 13b pour passer d'une position escamotée dans la au moins une première section 3 à une position en saillie du fond de la première surface 11 de moulage et réciproquement.

Dans l'exemple illustré à la figure 17, la au moins une première section 3 et/ou la deuxième section 4 de la partie 1a du moule 1 comprend un dispositif 17 de refroidissement destiné à refroidir une portion du corps creux 10. La au moins une première section 3a de moule 1 comprend des éléments 17a de refroidissement destinés à refroidir la première portion du corps creux 10. La deuxième section 4a de moule 1 comprend des éléments 17b de refroidissement destinés à refroidir la deuxième portion du corps creux 10. Bien entendu, les éléments 17a, 17b de refroidissement peuvent faire parties d'un même circuit hydraulique du dispositif 17 de refroidissement.

Les figures 5 à 7 illustrent également un procédé de moulage par extrusion-soufflage d'un corps creux 10 de réservoir en matière plastique pour un véhicule automobile à partir d'une paraison 20, le réservoir comportant au moins un composant interne 30 fixé à l'intérieur de la paraison 20 lors du moulage du corps creux 10, **caractérisé en ce que** le procédé comprend les étapes suivantes :
a) introduire ledit au moins un composant interne 30 et la paraison 20 à l'état fondu dans un moule 1 ouvert en deux parties 1a, 1b de manière à ce que ledit au moins un composant interne 30 soit entouré par la paraison 20, au moins une partie 1a, 1b dudit moule 1 comprenant au moins une première section 3 et une deuxième section 4 délimitant intérieurement respectivement une première 11 surface de moulage et une deuxième surface 12 de moulage d'une surface totale de moulage du moule 1,
b) déplacer la au moins une première section 3 de la partie 1a, 1b du moule 1 pour amener le moule 1 dans une position de fermeture intermédiaire dans laquelle la au moins une première section 3 appuie la paraison 20 contre ledit au moins un composant interne 30 afin de fixer ledit au moins un composant interne 30 à l'intérieur de la paraison 20, la première surface 11 de moulage étant configurée pour former en même temps, par pressage, plusieurs zones de fixation dudit au moins un composant interne 30 à l'intérieur de la paraison 20,
c) déplacer la deuxième section 4 de la partie 1a, 1b du moule 1 par rapport à la au moins une première section 3 de la partie 1a, 1b du moule 1 pour amener le moule 1 dans une position de fermeture finale dans laquelle les deux parties 1a, 1b du moule 1 sont fermées l'une contre l'autre en délimitant intérieurement la surface totale de moulage destinée à reproduire une forme prédéterminée du corps creux 10 à fabriquer,
d) réaliser un soufflage de la paraison 20 en plaquant ladite paraison 20 sur la surface totale de moulage du moule 1 à l'aide d'un gaz sous pression,
e) ouvrir le moule 1 pour sortir le corps creux 10 fabriqué.

De préférence, on introduit un gaz sous pression à l'intérieur de la paraison 20 pour effectuer un pré-soufflage de ladite paraison 20 entre l'étape a) et l'étape b). Une telle introduction de gaz peut être effectuée selon l'étape b) du document WO 2008/138869 afin notamment d'expanser la paraison en homogénéisant l'épaisseur de la paraison. L'introduction de gaz à plus faible pression que pour l'étape d) peut être obtenue de différentes manières connues par l'homme du métier. À titre d'exemple nullement limitatif, l'introduction de gaz pour le pré-soufflage peut être obtenue par l'outil de soufflage utilisé pour réaliser l'étape d), par un outil dédié monté sur le moule, par une tige creuse de support de composant interne ou par une buse comprise dans la tête d'extrusion de la paraison.

Avantageusement, à l'étape b), ledit au moins un composant interne 30 est fixé à l'intérieur de la paraison 20 par soudage, bouterollage ou ancrage mécanique.

En position de fermeture finale du moule 1, le soufflage de l'étape d) est réalisé sous une pression de soufflage de l'ordre de 10 bars (1 MPa). Afin que la pression de soufflage ne s'exerce pas sur l'actionneur 6 par l'intermédiaire de la au moins une première section de moule 3, une reprise d'effort est réalisée sur une plaque support 9 solidaire de la machine de moulage 100.

Les figures 8 à 10 illustrent un deuxième mode de réalisation du moule 1. Le deuxième mode de réalisation diffère du premier mode de réalisation en ce que la deuxième partie 1b de moule 1 forme une section monobloc 8. En d'autres termes, la section monobloc 8 dans les figures 8 à 10 remplace la au moins une première section 3b et la deuxième section 4b de la partie 1b du moule 1 par rapport au premier mode de réalisation des figures 5 à 7. Ceci permet de simplifier le moule 1 en réduisant le nombre de pièces nécessaires à sa construction.

Dans le deuxième mode de réalisation, il peut être envisagé qu'un seul actionneur 7 soit utilisé pour déplacer la deuxième section 4a vers la section monobloc 8 (qui serait donc statique) afin de simplifier encore d'avantage la machine de moulage 100. De même, bien que les figures illustrent la présence d'une seule première section 3a, 3b de la partie 1a, 1b du moule 1, on peut envisager que la au moins une première section 3a, 3b de moule 1 comprenne plusieurs premières sections 3a, 3b, par exemple, deux, trois, quatre, cinq, six, sept, huit, neuf ou dix premières sections 3a, 3b.

### Liste de références

1 : moule
1a : première partie du moule
1b : deuxième partie du moule
2 : cavité de moule
3, 3a, 3b : première section de moule
4, 4a, 4b : deuxième section de moule
5 : région d'appui
6 : premier actionneur
7 : deuxième actionneur
8 : section monobloc
9 : plaque support
10 : corps creux
11, 11a, 11b : première surface de moulage
12, 12a, 12b : deuxième surface de moulage
13 : outil de soufflage
13a : aiguille de soufflage
13b : actionneur d'aiguille de soufflage
14 : élément d'aspiration
14a : élément d'aspiration de fond
14b : élément d'aspiration de région d'appui 5
14c : raccordement à un dispositif d'aspiration
15 : élément de préhension
15a : pince
15b : actionneur
16, 16' : élément de chauffage
16a : chauffeur électrique
16b : chauffeur hydraulique
17 : dispositif de refroidissement
17a : élément de refroidissement de la première section 3a
17b : élément de refroidissement de la deuxième section 4a
20 : paraison
30 : composant interne
31 : pièce
100 : machine de moulage par extrusion-soufflage

## Revendications

1. Moule (1) de fabrication par extrusion-soufflage d'un corps creux (10) de réservoir en matière plastique pour un véhicule automobile à partir d'une paraison (20), le réservoir comportant au moins un composant interne (30) fixé à l'intérieur de la paraison (20) lors du moulage du corps creux (10), le moule (1) comprenant deux parties (1a, 1b) déplaçables l'une par rapport à l'autre délimitant intérieurement, lorsqu'elles sont fermées l'une contre l'autre en position de fermeture finale, une surface totale de moulage destinée à reproduire une forme prédéterminée du corps creux (10) à fabriquer, au moins une des parties (1a, 1b) du moule (1) comportant :
- au moins une première section (3, 3a, 3b) ayant une première surface (11, 11a, 11b) de moulage d'une première portion du corps creux (10) à fabriquer, ladite première surface (11, 11a, 11b) de moulage comportant au moins une région d'appui (5) configurée pour former, par pressage induit par le déplacement de la première surface (11, 11a, 11b) de moulage vers une position de fermeture intermédiaire des parties (1a, 1b) du moule (1), une zone de fixation dudit au moins un composant interne (30) à l'intérieur de la paraison (20),
- une deuxième section (4, 4a, 4b) ayant une deuxième surface (12, 12a, 12b) de moulage d'une deuxième portion du corps creux (10) à fabriquer,
la deuxième section (4, 4a, 4b) de la partie (1a, 1b) du moule (1) étant mobile par rapport à la au moins une première section (3, 3a, 3b) associée de la partie (1a, 1b) du moule (1) au moins entre la position de fermeture intermédiaire et la position de fermeture finale des parties (1a, 1b) du moule (1), **caractérisé en ce que** la première surface (11, 11a, 11b) de moulage de la partie (1a, 1b) du moule (1) comporte plusieurs régions d'appui (5) et est configurée afin que les régions d'appui (5) forment en même temps, par pressage induit par le déplacement de la première surface (11, 11a, 11b) de moulage vers la position de fermeture intermédiaire des parties (1a, 1b) du moule (1), plusieurs zones de fixation dudit au moins un composant interne (30) à l'intérieur de la paraison (20).

2. Moule (1) selon la revendication précédente, dans lequel la première surface (11, 11a, 11b) de moulage de la partie (1a, 1b) du moule (1) est configurée pour s'étendre selon une surface circonscrite contenant les régions (5) d'appui associées à la partie (1a, 1b) du moule (1).

3. Moule (1) selon la revendication précédente, dans lequel la surface circonscrite de la première surface (11, 11a, 11b) de moulage de la partie (1a, 1b) du moule (1) comporte une distance de marge prédéterminée au moins autour des régions (5) d'appui dudit au moins un composant interne (30) associées à la partie (1a, 1b) du moule (1) afin de limiter les ondulations de la matière autour de chaque zone de fixation.

4. Moule (1) selon la revendication précédente, dans lequel la distance de marge prédéterminée au moins autour des zones de fixation est comprise entre 1 mm et 60 mm.

5. Moule (1) selon l'une quelconque des revendications 2 à 4, dans lequel la surface circonscrite de la première surface (11, 11a, 11b) de moulage de la partie (1a, 1b) du moule (1) est au moins égale à 30 % de la surface totale de moulage.

6. Moule (1) selon l'une quelconque des revendications précédentes, dans lequel chaque partie (1a, 1b) du moule (1) comporte au moins une première section (3, 3a, 3b) et une deuxième section (4, 4a, 4b).

7. Moule (1) selon la revendication précédente, dans lequel la au moins une première section (3, 3a, 3b) de moule (1) de chaque partie (1a, 1b) du moule (1) comprend au moins une région d'appui (5) configurée pour appuyer la paraison (20) contre ledit même au moins un composant interne (30) afin de former au moins deux zones de fixation différentes dudit même au moins un composant interne (30) pour fixer ledit même au moins un composant interne (30) à l'intérieur de la paraison (20) lors du moulage du corps creux (10).

8. Moule (1) selon l'une quelconque des revendications 1 à 5, dans lequel une seule des parties (1a, 1b) du moule (1) comporte au moins une première section (3, 3a, 3b) et une deuxième section (4, 4a, 4b).

9. Moule (1) selon l'une quelconque des revendications précédentes, dans lequel, dans la position de fermeture finale, la au moins une première section (3, 3a, 3b) de moule de chaque partie (1a, 1b) du moule (1) est entourée par sa deuxième section (4, 4a, 4b) associée de la partie (1a, 1b) du moule (1).

10. Moule (1) selon l'une quelconque des revendications précédentes, dans lequel la au moins une première section (3, 3a, 3b) de la partie (1a, 1b) du moule (1) comprend au moins un élément (14a, 14b) d'aspiration destiné à aspirer la paraison (20) lors du moulage du corps creux (10).

11. Moule (1) selon l'une quelconque des revendications précédentes, dans lequel la au moins une première section (3, 3a, 3b) de la partie (1a, 1b) du moule (1) comprend un élément choisi parmi un élément (15, 15a) de préhension, un élément (16, 16', 16a, 16'a) de chauffage et un élément combiné de préhension (15, 15a) et de chauffage (16, 16', 16a, 16'a) d'une pièce (30, 31) destinée à être moulée avec la première portion du corps creux (10).

12. Moule (1) selon l'une quelconque des revendications précédentes, dans lequel la au moins une première section (3, 3a, 3b) de la partie (1a, 1b) du moule (1) comprend un outil (13, 13a) de soufflage destiné à introduire un gaz sous pression à l'intérieur de la paraison (20).

13. Moule (1) selon l'une quelconque des revendications précédentes, dans lequel la au moins une première section (3, 3a, 3b) et/ou la deuxième section (4, 4a, 4b) de la partie (1a, 1b) du moule (1) comprend un dispositif (17, 17a, 17b) de refroidissement destiné à refroidir une portion du corps creux (10).

14. Moule (1) selon l'une quelconque des revendications précédentes, dans lequel la au moins une première section (3, 3a, 3b) de la partie (1a, 1b) du moule (1) comprend plusieurs premières sections (3, 3a, 3b).

15. Machine (100) de moulage par extrusion-soufflage d'un corps creux (10) de réservoir en matière plastique pour un véhicule automobile à partir d'une paraison, **caractérisée en ce que** la machine comprend un moule (1) selon l'une quelconque des revendications précédentes.

16. Procédé de moulage par extrusion-soufflage d'un corps creux (10) de réservoir en matière plastique pour un véhicule automobile à partir d'une paraison (20), le réservoir comportant au moins un composant interne (30) fixé à l'intérieur de la paraison (20) lors du moulage du corps creux (10), **caractérisé en ce que** le procédé comprend les étapes suivantes :
a) introduire ledit au moins un composant interne (30) et la paraison (20) à l'état fondu dans un moule (1) ouvert en deux parties (1a, 1b) de manière à ce que ledit au moins un composant interne (30) soit entouré par la paraison (20), au moins une partie (1a, 1b) du moule (1) comprenant au moins une première section (3) et une deuxième section (4) délimitant intérieurement respectivement une première surface (11) de moulage et une deuxième surface (12) de moulage d'une surface totale de moulage du moule (1),
b) déplacer la au moins une première section (3) de la partie (1a, 1b) du moule (1) pour amener le moule (1) dans une position de fermeture intermédiaire dans laquelle la au moins une première section (3) de la partie (1a, 1b) du moule (1) appuie la paraison (20) contre ledit au moins un composant interne (30) afin de fixer ledit au moins un composant interne (30) à l'intérieur de la paraison 20, la première surface (11) de moulage étant configurée pour former en même temps, par pressage, plusieurs zones de fixation dudit au moins un composant interne (30) à l'intérieur de la paraison (20),
c) déplacer la deuxième section (4) de la partie (1a, 1b) du moule (1) par rapport à la au moins une première section (3) de la partie (1a, 1b) du moule (1) pour amener le moule (1) dans une position de fermeture finale dans laquelle les deux parties (1a, 1b) du moule (1) sont fermées l'une contre l'autre en délimitant intérieurement la surface totale de moulage destinée à reproduire une forme prédéterminée du corps creux (10) à fabriquer,
d) réaliser un soufflage de la paraison (20) en plaquant ladite paraison (20) sur la surface totale de moulage du moule (1) à l'aide d'un gaz sous pression,
e) ouvrir le moule (1) pour sortir le corps creux (10) fabriqué.

17. Procédé de moulage selon la revendication précédente, dans lequel on introduit un gaz sous pression à l'intérieur de la paraison (20) pour effectuer un pré-soufflage de ladite paraison (20) entre l'étape a) et l'étape b).

18. Procédé de moulage selon la revendication 16 ou 17, dans lequel, à l'étape b), ledit au moins un composant interne (30) est fixé à l'intérieur de la paraison (20) par soudage, bouterollage ou ancrage mécanique.

## Patentansprüche

1. Formwerkzeug (1) zur Herstellung durch Extrusionsblasformen eines Hohlkörpers (10) eines Kunststofftanks für ein Kraftfahrzeug aus einem Vorformling (20), wobei der Tank mindestens ein internes Bauteil (30) aufweist, das während des Formens des Hohlkörpers (10) im Inneren des Vorformlings (20) befestigt wird, wobei das Formwerkzeug (1) zwei relativ zueinander bewegbare Teile (1a, 1b) aufweist, die im Inneren, wenn sie in einer endgültigen Schließstellung gegeneinander geschlossen sind, eine gesamte Formfläche begrenzen, die dazu bestimmt ist, eine vorbestimmte Form des herzustellenden Hohlkörpers (10) nachzubilden, wobei mindestens eines der Teile (1a, 1b) des Formwerkzeugs (1) aufweist:
- mindestens einen ersten Abschnitt (3, 3a, 3b) mit einer ersten Formfläche (11, 11a, 11b) zum Formen eines ersten Abschnitts des herzustellenden Hohlkörpers (10), wobei die erste Formfläche (11, 11a, 11b) mindestens einen Anlagebereich (5) aufweist, der dazu ausgebildet ist, durch ein Pressen, das durch die Verlagerung der ersten Formfläche (11, 11a, 11b) in Richtung einer Zwischen-Schließstellung der Teile (1a, 1b) des Formwerkzeugs (1) bewirkt wird, eine Befestigungszone des mindestens einen internen Bauteils (30) im Inneren des Vorformlings (20) auszubilden,
- einen zweiten Abschnitt (4, 4a, 4b) mit einer zweiten Formfläche (12, 12a, 12b) zum Formen eines zweiten Abschnitts des herzustellenden Hohlkörpers (10),
wobei der zweite Abschnitt (4, 4a, 4b) des Teils (1a, 1b) des Formwerkzeugs (1) relativ zu dem mindestens einen zugehörigen ersten Abschnitt (3, 3a, 3b) des Teils (1a, 1b) des Formwerkzeugs (1) zumindest zwischen der Zwischen-Schließstellung und der endgültigen Schließstellung der Teile (1a, 1b) des Formwerkzeugs (1) beweglich ist,
**dadurch gekennzeichnet, dass** die erste Formfläche (11, 11a, 11b) des Teils (1a, 1b) des Formwerkzeugs (1) mehrere Anlagebereiche (5) aufweist und derart ausgebildet ist, dass die Anlagebereiche (5) gleichzeitig, durch ein Pressen, das durch die Verlagerung der ersten Formfläche (11, 11a, 11b) in Richtung der Zwischen-Schließstellung der Teile (1a, 1b) des Formwerkzeugs (1) bewirkt wird, mehrere Befestigungszonen des mindestens einen internen Bauteils (30) im Inneren des Vorformlings (20) ausbilden.

2. Formwerkzeug (1) nach dem vorhergehenden Anspruch, wobei die erste Formfläche (11, 11a, 11b) des Teils (1a, 1b) des Formwerkzeugs (1) dazu ausgebildet ist, sich gemäß einer umschriebenen Fläche zu erstrecken, welche die dem Teil (1a, 1b) des Formwerkzeugs (1) zugeordneten Anlagebereiche (5) enthält.

3. Formwerkzeug (1) nach dem vorhergehenden Anspruch, wobei die umschriebene Fläche der ersten Formfläche (11, 11a, 11b) des Teils (1a, 1b) des Formwerkzeugs (1) zumindest um die dem Teil (1a, 1b) des Formwerkzeugs (1) zugeordneten Anlagebereiche (5) des mindestens einen internen Bauteils (30) herum einen vorbestimmten Randabstand aufweist, um Wellenbildungen des Materials um jede Befestigungszone herum zu begrenzen.

4. Formwerkzeug (1) nach dem vorhergehenden Anspruch, wobei der vorbestimmte Randabstand zumindest um die Befestigungszonen herum zwischen 1 mm und 60 mm beträgt.

5. Formwerkzeug (1) nach einem der Ansprüche 2 bis 4, wobei die umschriebene Fläche der ersten Formfläche (11, 11a, 11b) des Teils (1a, 1b) des Formwerkzeugs (1) mindestens 30 % der gesamten Formfläche entspricht.

6. Formwerkzeug (1) nach einem der vorhergehenden Ansprüche, wobei jedes Teil (1a, 1b) des Formwerkzeugs (1) mindestens einen ersten Abschnitt (3, 3a, 3b) und einen zweiten Abschnitt (4, 4a, 4b) aufweist.

7. Formwerkzeug (1) nach dem vorhergehenden Anspruch, wobei der mindestens eine erste Abschnitt (3, 3a, 3b) des Formwerkzeugs (1) jedes Teils (1a, 1b) des Formwerkzeugs (1) mindestens einen Anlagebereich (5) aufweist, der dazu ausgebildet ist, den Vorformling (20) gegen dasselbe mindestens eine interne Bauteil (30) anzudrücken, um mindestens zwei unterschiedliche Befestigungszonen desselben mindestens einen internen Bauteils (30) auszubilden, um dasselbe mindestens eine interne Bauteil (30) während des Formens des Hohlkörpers (10) im Inneren des Vorformlings (20) zu befestigen.

8. Formwerkzeug (1) nach einem der Ansprüche 1 bis 5, wobei nur eines der Teile (1a, 1b) des Formwerkzeugs (1) mindestens einen ersten Abschnitt (3, 3a, 3b) und einen zweiten Abschnitt (4, 4a, 4b) aufweist.

9. Formwerkzeug (1) nach einem der vorhergehenden Ansprüche, wobei in der endgültigen Schließstellung der mindestens eine erste Abschnitt (3, 3a, 3b) des Formwerkzeugs jedes Teils (1a, 1b) des Formwerkzeugs (1) von seinem zugehörigen zweiten Abschnitt (4, 4a, 4b) des Teils (1a, 1b) des Formwerkzeugs (1) umgeben ist.

10. Formwerkzeug (1) nach einem der vorhergehenden Ansprüche, wobei der mindestens eine erste Abschnitt (3, 3a, 3b) des Teils (1a, 1b) des Formwerkzeugs (1) mindestens ein Saugelement (14a, 14b) aufweist, das dazu bestimmt ist, den Vorformling (20) während des Formens des Hohlkörpers (10) anzusaugen.

11. Formwerkzeug (1) nach einem der vorhergehenden Ansprüche, wobei der mindestens eine erste Abschnitt (3, 3a, 3b) des Teils (1a, 1b) des Formwerkzeugs (1) ein Element aufweist, das ausgewählt ist aus einem Greifelement (15, 15a), einem Heizelement (16, 16', 16a, 16'a) und einem kombinierten Greif- (15, 15a) und Heizelement (16, 16', 16a, 16'a) für ein Teil (30, 31), das dazu bestimmt ist, mit dem ersten Abschnitt des Hohlkörpers (10) mitgeformt zu werden.

12. Formwerkzeug (1) nach einem der vorhergehenden Ansprüche, wobei der mindestens eine erste Abschnitt (3, 3a, 3b) des Teils (1a, 1b) des Formwerkzeugs (1) ein Blaswerkzeug (13, 13a) aufweist, das dazu bestimmt ist, ein unter Druck stehendes Gas in das Innere des Vorformlings (20) einzuleiten.

13. Formwerkzeug (1) nach einem der vorhergehenden Ansprüche, wobei der mindestens eine erste Abschnitt (3, 3a, 3b) und/oder der zweite Abschnitt (4, 4a, 4b) des Teils (1a, 1b) des Formwerkzeugs (1) eine Kühleinrichtung (17, 17a, 17b) aufweist, die dazu bestimmt ist, einen Abschnitt des Hohlkörpers (10) zu kühlen.

14. Formwerkzeug (1) nach einem der vorhergehenden Ansprüche, wobei der mindestens eine erste Abschnitt (3, 3a, 3b) des Teils (1a, 1b) des Formwerkzeugs (1) mehrere erste Abschnitte (3, 3a, 3b) aufweist.

15. Maschine (100) zum Extrusionsblasformen eines Hohlkörpers (10) eines Kunststofftanks für ein Kraftfahrzeug aus einem Vorformling, **dadurch gekennzeichnet, dass** die Maschine ein Formwerkzeug (1) nach einem der vorhergehenden Ansprüche aufweist.

16. Verfahren zum Extrusionsblasformen eines Hohlkörpers (10) eines Kunststofftanks für ein Kraftfahrzeug aus einem Vorformling (20), wobei der Tank mindestens ein internes Bauteil (30) aufweist, das während des Formens des Hohlkörpers (10) im Inneren des Vorformlings (20) befestigt wird, **dadurch gekennzeichnet, dass** das Verfahren die folgenden Schritte umfasst:
a) Einbringen des mindestens einen internen Bauteils (30) und des Vorformlings (20) im geschmolzenen Zustand in ein geöffnetes, zweiteiliges Formwerkzeug (1) mit zwei Teilen (1a, 1b), derart, dass das mindestens eine interne Bauteil (30) von dem Vorformling (20) umgeben ist, wobei mindestens ein Teil (1a, 1b) des Formwerkzeugs (1) mindestens einen ersten Abschnitt (3) und einen zweiten Abschnitt (4) aufweist, die im Inneren jeweils eine erste Formfläche (11) und eine zweite Formfläche (12) einer gesamten Formfläche des Formwerkzeugs (1) begrenzen,
b) Verlagern des mindestens einen ersten Abschnitts (3) des Teils (1a, 1b) des Formwerkzeugs (1), um das Formwerkzeug (1) in eine Zwischen-Schließstellung zu bringen, in der der mindestens eine erste Abschnitt (3) des Teils (1a, 1b) des Formwerkzeugs (1) den Vorformling (20) gegen das mindestens eine interne Bauteil (30) drückt, um das mindestens eine interne Bauteil (30) im Inneren des Vorformlings (20) zu befestigen, wobei die erste Formfläche (11) dazu ausgebildet ist, durch Pressen gleichzeitig mehrere Befestigungszonen des mindestens einen internen Bauteils (30) im Inneren des Vorformlings (20) auszubilden,
c) Verlagern des zweiten Abschnitts (4) des Teils (1a, 1b) des Formwerkzeugs (1) relativ zu dem mindestens einen ersten Abschnitt (3) des Teils (1a, 1b) des Formwerkzeugs (1), um das Formwerkzeug (1) in eine endgültige Schließstellung zu bringen, in der die beiden Teile (1a, 1b) des Formwerkzeugs (1) gegeneinander geschlossen sind und im Inneren die gesamte Formfläche begrenzen, die dazu bestimmt ist, eine vorbestimmte Form des herzustellenden Hohlkörpers (10) nachzubilden,
d) Durchführen eines Blasens des Vorformlings (20), wobei der Vorformling (20) mittels eines unter Druck stehenden Gases an die gesamte Formfläche des Formwerkzeugs (1) angelegt wird,
e) Öffnen des Formwerkzeugs (1), um den hergestellten Hohlkörper (10) zu entnehmen.

17. Formverfahren nach dem vorhergehenden Anspruch, wobei zwischen Schritt a) und Schritt b) ein unter Druck stehendes Gas in das Innere des Vorformlings (20) eingeleitet wird, um ein Vorblasen des Vorformlings (20) durchzuführen.

18. Formverfahren nach Anspruch 16 oder 17, wobei in Schritt b) das mindestens eine interne Bauteil (30) im Inneren des Vorformlings (20) durch Schweißen, Bördeln oder mechanisches Verankern befestigt wird.

## Claims

1. Mould (1) for manufacturing by extrusion blow-moulding a hollow tank body (10) made of plastic material for a motor vehicle from a parison (20), the tank comprising at least one internal component (30) fixed to the interior of the parison (20) during the moulding of the hollow body (10), the mould (1) comprising two parts (1a, 1b) movable relative to one another delimiting internally, when they are closed against each other in the final closed position, a total moulding surface intended to reproduce a predetermined shape of the hollow body (10) to be manufactured, at least one of the parts (1a, 1b) of the mould (1) comprising:
- at least one first section (3, 3a, 3b) having a first moulding surface (11, 11a, 11b) of a first portion of the hollow body (10) to be manufactured, said first moulding surface (11, 11a, 11b) comprising at least one contact region (5) configured to form, by pressing induced by the movement of the first (11, 11a, 11b) towards an intermediate closed position of the parts (1a, 1b) of the mould (1), a region for fixing said at least one internal component (30) inside the parison (20),
- a second section (4, 4a, 4b) having a second surface (12, 12a, 12b) for moulding a second portion of the hollow body (10) to be manufactured.
the second section (4, 4a, 4b) of the part (1a, 1b) of the mould (1) being movable relative to the at least one first associated section (3, 3a, 3b) of the part (1a, 1b) of the mould (1) at least between the intermediate closing position and the final closing position of the parts (1a, 1b) of the mould (1), **characterized in that** the first moulding surface (11, 11a, 11b) of the part (1a, 1b) of the mould (1) comprises a plurality of contact regions (5) and is configured so that the contact regions (5) form at the same time, by pressing induced by the movement of the first (11, 11a, 11b) towards an intermediate closed position of the parts (1a, 1b) of the mould (1), a plurality of regions for fixing said at least one internal component (30) inside the parison (20).

2. Mould (1) according to the preceding claim, wherein the first surface (11, 11a, 11b) for moulding the part (1a, 1b) of the mould (1) is configured to extend along a circumscribed surface containing the contact regions (5) associated with the part (1a, 1b) of the mould (1).

3. Mould (1) according to the preceding claim, wherein the circumscribed surface of the first moulding surface (11, 11a, 11b) of the part (1a, 1b) of the mould (1) comprises a predetermined margin distance at least around the contact regions (5) of said at least one internal component (30) associated with the part (1a, 1b) of the mould (1) in order to limit the ripples of the material around each fixing region.

4. Mould (1) according to the preceding claim, wherein the predetermined margin distance at least around the fixing regions is between 1 mm and 60 mm.

5. Mould (1) according to any one of claims 2 to 4, wherein the circumscribed surface of the first moulding surface (11, 11a, 11b) of the part (1a, 1b) of the mould (1) is at least equal to 30% of the total moulding surface.

6. Mould (1) according to any one of the preceding claims, wherein each part (1a, 1b) of the mould (1) comprises at least one first section (3, 3a, 3b) and a second section (4, 4a, 4b).

7. Mould (1) according to the preceding claim, wherein the at least one first mould (1) section (3, 3a, 3b) of each part (1a, 1b) of the mould (1) may comprise at least one bearing region (5) configured to press the parison (20) against said same at least one internal component (30) in order to form at least two different regions for fixing said same at least one internal component (30) for fixing said same at least one internal component (30) inside the parison (20) during the moulding of the hollow body (10).

8. Mould (1) according to any one of claims 1 to 5, wherein only one of the parts (1a, 1b) of the mould (1) comprises at least one first section (3, 3a, 3b) and a second section (4, 4a, 4b).

9. Mould (1) according to any one of the preceding claims, wherein, in the final closing position, the at least one first mould section (3, 3a, 3b) of each part (1a, 1b) of the mould (1) is surrounded by its second associated section (4, 4a, 4b) of the part (1a, 1b) of the mould (1).

10. Mould (1) according to any one of the preceding claims, wherein the at least one first section (3, 3a, 3b) of the part (1a, 1b) of the mould (1) comprises at least one suction element (14a, 14b) intended to suck the parison (20) during the moulding of the hollow body (10).

11. Mould (1) according to any of the preceding claims, wherein the at least one first section (3, 3a, 3b) of the part (1a, 1b) of the mould (1) comprises an element selected from a gripping element (15, 15a), a heating element (16, 16', 16a, 16'a), and a combined gripping (15, 15a) and heating (16, 16', 16a, 16'a) element for gripping and/or heating a workpiece (30, 31) intended to be moulded with the first portion of the hollow body (10).

12. Mould (1) according to any one of the preceding claims, wherein the at least one first section (3, 3a, 3b) of the part (1a, 1b) of the mould (1) comprises a blowing tool (13, 13a) intended to introduce a pressurized gas inside the parison (20).

13. Mould (1) according to any one of the preceding claims, wherein the at least one first section (3, 3a, 3b) and/or the second section (4, 4a, 4b) of the part (1a, 1b) of the mould (1) comprises a cooling device (17, 17a, 17b) intended to cool a portion of the hollow body (10).

14. Mould (1) according to any of the preceding claims, wherein the at least one first section (3, 3a, 3b) of the part (1a, 1b) of the mould (1) comprises a plurality of first sections (3, 3a, 3b).

15. Machine (100) for moulding by extrusion blow-moulding a hollow tank body (10) made of plastic material for a motor vehicle from a parison, **characterized in that** the machine comprises a mould (1) according to any one of the preceding claims.

16. Method for moulding by extrusion blow-moulding a plastic hollow body (10) a tank for a motor vehicle from a parison (20), the tank comprising at least one internal component (30) fixed inside the parison (20) during the moulding of the hollow body (10), **characterized in that** the method comprises the following steps:
a) introducing said at least one internal component (30) and the molten parison (20) into an open mould (1) in two parts (1a, 1b) so that said at least one internal component (30) is surrounded by the parison (20), at least one part (1a, 1b) of the mould (1) comprising at least one first section (3) and a second section (4) internally delimiting a first moulding surface (11) and a second moulding surface (12), respectively, of a total moulding surface of the mould (1),
b) moving the at least one first section (3) of the part (1a, 1b) of the mould (1) to bring the mould (1) into an intermediate closing position wherein the at least one first section (3) of the part (1a, 1b) of the mould (1) presses the parison (20) against said at least one internal component (30) in order to fix said at least one internal component (30) inside the parison 20, the first moulding surface (11) being configured to form at the same time, by pressing, a plurality of regions for fixing said at least one internal component (30) inside the parison (20),
c) moving the second section (4) of the part (1a, 1b) of the mould (1) relative to the at least one first section (3) of the part (1a, 1b) of the mould (1) to bring the mould (1) into a final closing position wherein the two parts (1a, 1b) of the mould (1) are closed against each other by internally delimiting the total moulding surface for reproducing a predetermined shape of the hollow body (10) to be manufactured,
d) performing a blowing of the parison (20) by placing said parison (20) on the total moulding surface of the mould (1) using a pressurized gas,
e) opening the mould (1) to take out the manufactured hollow body (10).

17. Moulding method according to the preceding claim, wherein a pressurized gas is introduced inside the parison (20) to pre-blow said parison (20) between step a) and step b).

18. Moulding method according to claim 16 or 17, wherein, in step b), said at least one internal component (30) is fixed inside the parison (20) by welding, heading or mechanical anchoring.
